# EUROPÄISCHE PATENTSCHRIFT

(11) **EP 3 090 886 B1**
(45) Veröffentlichungstag und Bekanntmachung des Hinweises auf die Patenterteilung: **15.11.2017**
(21) Anmeldenummer: 16167871.9
(22) Anmeldetag: 02.05.2016
(51) Int. Cl.: B60C 27/12

(54) **GLEITSCHUTZVORRICHTUNG FÜR FAHRZEUGREIFEN**
ANTI-SKID AND ANTI-SLIDE DEVICE FOR VEHICLE TIRES
DISPOSITIF ANTI-DERAPANT POUR PNEUS DE VEHICULE

(30) Priorität: 05.05.2015 AT 503612015
(43) Veröffentlichungstag der Anmeldung: 09.11.2016
(73) Patentinhaber: Pewag Schneeketten GmbH & Co KG, 8041 Graz (AT)
(72) Erfinder: Nieß, Bernhard, 8312 Ottendorf (AT)
(74) Vertreter: Patentanwaltskanzlei Matschnig & Forsthuber OG

(56) Entgegenhaltungen:
- EP-A1- 2 759 420
- WO-A1-2004/022364
- CA-A- 1 268 693
- DE-A1- 19 708 756
- FR-A1- 2 879 507

## Beschreibung

Die Erfindung betrifft eine Gleitschutzvorrichtung für Fahrzeugreifen umfassend ein Laufnetz, einen Innenspannstrang, welcher Innenspannstrang ringförmig schließbar ist, einen Außenspannstrang, welcher Außenspannstrang ein erstes Ende aufweist, wobei zumindest ein Teil des Außenspannstrangs ringförmig schließbar ist, und eine Spannvorrichtung, vorzugsweise genau eine Spannvorrichtung, welche Spannvorrichtung ein, vorzugsweise genau ein, mit Federkraft in Spannvorrichtung einziehbares Spannseil aufweist. Gleitschutzvorrichtungen, insbesondere selbstspannende Gleitschutzketten und Schneeketten, mit einer dazugehörigen Spannvorrichtungen sind dem Stand der Technik bekannt (siehe beispielsweise FR 2879507 A1, CA 1268693 A, EP 2759420 A1).

Zum Beispiel offenbart das Dokument EP 1935674 B1 eine Spannvorrichtung für eine Gleitschutzkette der eingangs beschriebenen Art, worin die Spannvorrichtung unter anderem ein Dämpferelement aufweist und in den Außenspannstrang der Schneekette integriert ist. Das Ende des Spannseils der Spannvorrichtung wird mit einem Ende einer Spannkette verbunden. Sodann wird die Kette infolge des Selbstspannens der Spannvorrichtung auf dem Reifen fixiert. Da das Einziehen des Spannseils ruckartig durch Federkraft erfolgt, entsteht das Risiko einer Verletzung des Benutzers durch das durch die Federkraft zurückgezogene Ende, beispielsweise durch einen Peitscheneffekt. Um die Verletzungsgefahr zu verringern, umfasst die Spannvorrichtung, wie bereits erwähnt, ein Dämpferelement, welches zum Abbremsen der Einziehbewegung und Reduktion der kinetischen Energie, welche die Finger des Bedieners verletzen kann, dient. Dieses Dämpferelement ist jedoch teuer in der Anschaffung und nicht besonders zyklenfest, das heißt, bei mehrmaliger Betätigung hintereinander wird die Viskosität des im inneren des Dämpferelements verwendeten Öles herabgesetzt, was ein deutliches Nachlassen der Bremswirkung mit sich ziehen kann.

Die internationale Anmeldung WO 2004022364 A1 des Anmelders zeigt eine gattungsbildende Gleitschutzkette mit einem Laufnetz, welches zwischen einer in einem montierten Zustand an einer inneren Seitenflanke eines Reifens anliegenden inneren Halterung und einem in einem montierten Zustand im Wesentlichen an einer äußeren Seitenflanke des Reifens anliegenden Seitenstrang verläuft, wobei die Gleitschutzkette an der Außenseite des Reifens durch zumindest einen mit zumindest einem Spannelement verbundenen Spannstrang gespannt ist. Bei dieser Gleitschutzkette ist zumindest ein Umlenkelement vorgesehen, durch welches der zumindest eine Spannstrang derart geführt wird, dass das Verrutschen der montierten Kette verringert wird.

DE 19708756 A1 offenbart ein Spannschloss für Gleitschutzketten. Figur 6 des Dokuments D5 zeigt eine auf einem Reifen montierte Schneekette mit zwei Spanschlössern gemäß D5. Der Außenspannstrang wird mit Hilfe der Spannschlösser O-förmig geschlossen, wobei die derart ausgebildete O-Form die Spannschlösser umfasst.

Ein weiterer Nachteil des Standes der Technik besteht darin, dass die in den Gleitschutzvorrichtungen verwendete Spannschlösser nah am äußeren Rande eines Reifens liegen, wenn eine solche Gleitschutzvorrichtung an dem Reifen montiert ist. Das erhöht die Gefahr, dass die Spannschlösser beispielsweise durch Randsteine beschädigt werden, wodurch die zu erwartende Benutzungsdauer der Gleitschutzvorrichtung erheblich verringert wird.

Die beschriebenen Nachteile des Stands der Technik sollen ausgeräumt werden. Es ist daher eine Aufgabe dieser Erfindung, eine Gleitschutzvorrichtung mit einer Spannvorrichtung zu entwickeln, welche die Verletzungsgefahr bei der Montage der Gleitschutzvorrichtung reduziert und weniger kostenaufwendig ist.

Diese Aufgabe wird ausgehend von einer eingangs erwähnten Gleitschutzvorrichtung erfindungsgemäß dadurch gelöst, dass die Spannvorrichtung einerseits mit dem ersten Ende lösbar verbindbar oder fest verbunden ist und andererseits mit dem Außenspannstrang lösbar verbindbar ist, vorzugsweise lediglich einerseits mit dem ersten Ende lösbar verbindbar und lediglich andererseits mit dem Außenspannstrang lösbar verbindbar ist. Bevorzugt ist eine Ausführungsform, bei welcher die Gleitschutzvorrichtung genau eine Spannvorrichtung, welche Spannvorrichtung genau ein mit Federkraft in die Spannvorrichtung einziehbares Spannseil aufweist und lediglich an genau zwei Stellen (lediglich einerseits und andererseits) mit dem Außenspannstrang in Kontakt kommen kann.

Der Vorteil einer solchen Gleitschutzvorrichtung besteht darin, dass die Spannvorrichtung nicht mit dem Außenspannstrang fest verbunden sein muss. Somit kann das Risiko einer Verletzung des Benutzers durch das durch die Federkraft zurückgezogene Spannseil deutlich verringert werden, indem bei der Montage der Gleitschutzvorrichtung auf einen Reifen zuerst das Spannseil mit dem Außenspannstrang verbunden wird.

Eine vorteilhafte Ausgestaltung kann hierbei vorsehen, dass die, vorzugsweise genau eine, Spannvorrichtung mithilfe eines, vorzugsweise genau eines, Koppelelements mit dem Außenspannstrang lösbar verbindbar ist und das, vorzugsweise genau eine, Spannseil mit dem ersten Ende lösbar verbindbar oder fest verbunden ist. Dies ergibt eine Anordnung, bei der erst während des Fixierens der Spannvorrichtung in einem Außenspannstrang die Vorspannung auf das Federelement aufgebracht wird. Somit wird nie eine potentielle Energie in einer nicht im Einsatz befindlichen Spannvorrichtung gespeichert.

Bei einer alternativen Ausgestaltung kann vorgesehen sein, dass das, vorzugsweise genau eine, Spannseil mit dem Außenspannstrang lösbar verbindbar ist oder fest verbunden ist und die, vorzugsweise genau eine, Spannvorrichtung mithilfe eines, vorzugsweise genau eines, Koppelelements mit dem ersten Ende lösbar verbindbar ist.

Die beiden eben genannten alternativen Ausgestaltungen sind aus zweierlei Gründen von Vorteil: Zum einen kann der Benutzer bei der Montage der Gleitschutzvorrichtung an der Spannvorrichtung statt an dem Spannseil ziehen und dadurch das Risiko reduzieren, dass der unter Federkraft gespannte Teil der Spannvorrichtung dem Benutzer aus der Hand rutscht, zum anderen kann der Benutzer frei wählen, an welcher Stelle des Außenspannstrangs die Spannvorrichtung gekoppelt wird, und dadurch die für das Spannen notwendige Auszugslänge des Spannseiles anpassen.

Es ist zudem günstig, wenn das, vorzugsweise genau eine, Koppelelement gegenüber einer, vorzugsweise genau einer, Gehäuseöffnung angeordnet ist, durch welche Gehäuseöffnung das, vorzugsweise genau eine, Spannseil aus der Spannvorrichtung ausziehbar oder in die Spannvorrichtung einziehbar ist. Dies ergibt eine Anordnung, bei der die Spannvorrichtung ruhig am Reifen anliegen kann.

Darüber hinaus kann vorgesehen sein, dass das, vorzugsweise genau eine, Spannseil ein Verbindungselement aufweist, mit dessen Hilfe das Spannseil mit dem ersten Ende oder mit dem Außenspannstrang lösbar verbindbar ist. Dies hat zum Vorteil, dass die Spannvorrichtung vom Außenspannstrang gelöst und als eigener Bauteil der Gleitschutzvorrichtung entnommen und/ oder ersetzt werden kann.

Es hat sich als zweckmäßig erwiesen, wenn der Innenspannstrang ein Schlosselement aufweist, mit dessen Hilfe der Innenspannstrang ringförmig schließbar ist. Bei einem vorhandenen Schlosselement kann der Innenspannstrang schnell und effektiv geschlossen und wieder geöffnet werden.

Es ist zudem günstig, wenn der Außenspannstrang einen überstehenden Abschnitt aufweist, welcher in einem geschlossenen Zustand des Außenstrangs in das erste Ende ausläuft, wobei die Spannvorrichtung einerseits mit einem in einem geschlossenen Zustand des Außenstrangs O-förmigen Teil des Außenspannstrangs lösbar verbindbar ist und andererseits mit dem ersten Ende lösbar verbindbar oder fest verbunden ist.

Des Weiteren kann vorgesehen sein, dass der Außenspannstrang einen überstehenden Abschnitt aufweist, welcher in einem geschlossenen Zustand des Außenstrangs in das erste Ende ausläuft, wobei das Spannseil mit dem ersten Ende lösbar verbindbar oder fest verbunden ist und die Spannvorrichtung mithilfe eines Koppelelements mit dem in einem geschlossenen Zustand des Außenstrangs O-förmigen Teil des Außenspannstrangs lösbar verbindbar ist.

Darüber hinaus kann vorgesehen sein, dass der Außenspannstrang einen überstehenden Abschnitt aufweist, welcher in einem geschlossenen Zustand des Außenstrangs in das erste Ende ausläuft, wobei die Spannvorrichtung mithilfe eines Koppelelements mit dem ersten Ende lösbar verbindbar und das Spannseil mit dem in einem geschlossenen Zustand des Außenstrangs O-förmigen Teil des Außenspannstrangs lösbar verbindbar ist oder fest verbunden ist.

Der Vorteil der drei oben genannten Ausgestaltungen ist, dass der Außenspannstrang in Form einer Schlinge geschlossen werden kann, d.h., in einem geschlossenen Zustand bildet der Außenspannstrang eine runde oder längliche Form, ist ineinander verknüpft, und weist den O-förmigen und den überstehenden Teil auf (eine Schlinge), wobei der O-förmiger Teil durch Ziehen am überstehenden Teil zusammengezogen werden kann. Dabei liegt Spannvorrichtung geschützt im inneren Bereich des O-förmigen Teils des Außenspannstrangs, wodurch die Gefahr der Beschädigung der Spannvorrichtung durch Randsteine oder nicht ganz zentriert montierte Schneeketten verringert.

Weiterhin kann vorgesehen sein, dass der Außenspannstrang einen ersten Außenspannstrang-Abschnitt und einen zweiten Außenspannstrang-Abschnitt aufweist, wobei der erste Außenspannstrang-Abschnitt mit dem zweiten Außenspannstrang-Abschnitt schlingenförmig schließbar ist, wobei der überstehende Abschnitt aus einem Teil des ersten Außenspannstrang-Abschnitts gebildet ist.

Darüber hinaus kann mit Vorteil vorgesehen sein, dass der erste Außenspannstrang-Abschnitt ein zweites Ende aufweist, wobei das zweite Ende mit dem zweiten Außenspannstrang-Abschnitt lösbar verbindbar ist.

Diese Aufteilung des Außenspannstrangs in zwei Abschnitte ermöglicht eine schnellere Montage der Gleitschutzvorrichtung und eine benutzerfreundliche Anpassung der Länge des überstehenden Abschnitts, wodurch die Gleitschutzvorrichtung an Reifen unterschiedlicher Größe ohne Weiteres montiert werden kann.

Es kann vorteilhaft sein, wenn der zweite Außenspannstrang-Abschnitt mit dem Laufnetz verbunden ist und der erste Außenspannstrang-Abschnitt einen Unterabschnitt aufweist, wobei der Unterabschnitt mit dem Laufnetz verbunden ist. Bei dieser Laufnetz-Anordnung wird ein Teil des Außenspannstrangs nicht mit dem Laufnetz verbunden und bleibt für die Bildung eine Schlinge und für die Einspannung der Gleitschutzvorrichtung frei.

Dabei hat es sich als zweckmäßig erwiesen, wenn dem überstehenden Abschnitt ein Scheibenblock zugeordnet ist, wobei der überstehende Abschnitt in einem geschlossenen Zustand des Außenstrangs aus dem Scheibenblock hinausläuft.

Außerdem kann mit Vorteil vorgesehen sein, dass der Scheibenblock mithilfe eines Hakenpaares mit dem zweiten Außenspannstrang-Abschnitt lösbar verbindbar ist.

Bei der Montage dieser günstigen Ausgestaltung wird der Scheibenblock zunächst mit dem zweiten Außenspannstrang-Abschnitt verbunden, dabei wird der erste Außenspannstrang-Abschnitt durch die Öffnung des Scheibenblocks geführt. Dabei wird eine Schlinge mit dem überstehenden Abschnitt des ersten Außenspannstrang-Abschnitts gebildet, deren Größe vorteilhafterweise leicht variierbar ist. Die Größe der Schlinge kann beispielsweise durch Vorwärts- und Rückwärtsführen des ersten Außenspannstrang-Abschnitts durch die Öffnung des Scheibenblocks verändert werden.

Weiters kann vorgesehen sein, dass dem überstehenden Abschnitt zumindest ein Führungselement zugeordnet ist, wobei das zumindest eine Führungselement zumindest zwei Öffnungen aufweist, wobei in einem geschlossenen Zustand des Außenstrangs der überstehende Abschnitt und der O-förmige Teil des Außenspannstrangs durch das zumindest eine Führungselement führbar sind. Dies ergibt eine günstige Spannwirkung des Außenspannstrangs für das Laufnetz.

In günstigen Ausgestaltungen des Laufnetzes kann dieser aus Gliederkettensträngen und / oder Rundstahlkettensträngen und / oder Stegkettensträngen gebildet sein.

Die vorliegende Erfindung wird nachfolgend anhand eines bevorzugten und nicht einschränkenden Ausführungsbeispiels noch eingehender veranschaulicht, das eine Schneekette für ein Kraftfahrzeug in zwei Ausgestaltungen betrifft und in den beigefügten Zeichnungen dargestellt ist, welche zeigen:
Fig. 1 einen schematischen Plan der Schneekette gemäß der ersten Ausgestaltung mit einer Spannvorrichtung und mit einem ringförmig schließbaren Außenspannstrang in einem nichtmontierten ausgelegten Zustand,
Fig. 2 einen schematischen Plan der Schneekette gemäß der zweiten Ausgestaltung mit einer Spannvorrichtung und mit einem schlingenförmig schließbaren Außenspannstrang in einem nichtmontierten ausgelegten Zustand,
Fig. 3 eine perspektivische Ansicht der Schneekette der Fig. 2 noch während der Montage,
Fig. 4 eine perspektivische Ansicht der Schneekette der Fig. 2 in einem auf einem Reifen montierten gespannten Zustand,
Fig. 5 eine perspektivische Ansicht der geöffneten Spannvorrichtung in einer Sperrposition,
Fig. 6 eine Draufsicht der geöffneten Spannvorrichtung in einer Sperrposition, und
Fig. 7 eine Draufsicht der geöffneten Spannvorrichtung in einer Freigabeposition.

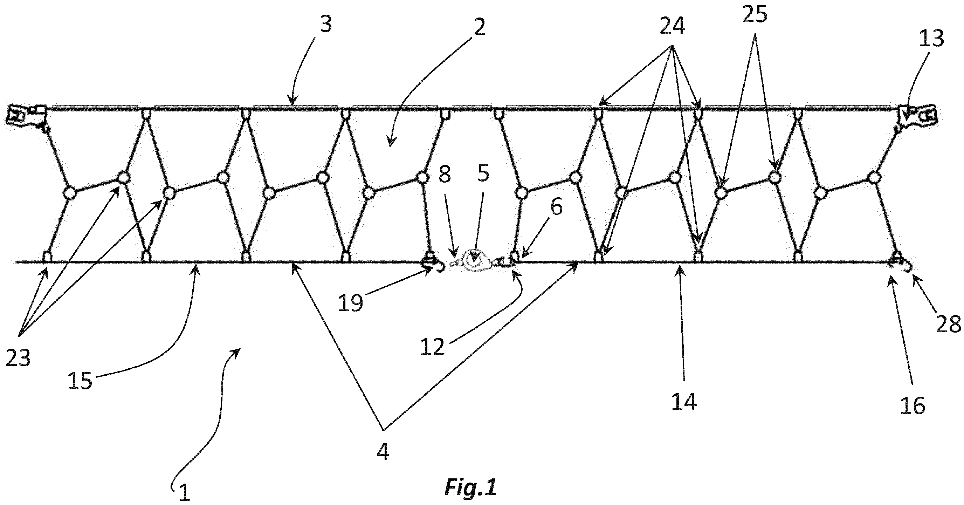

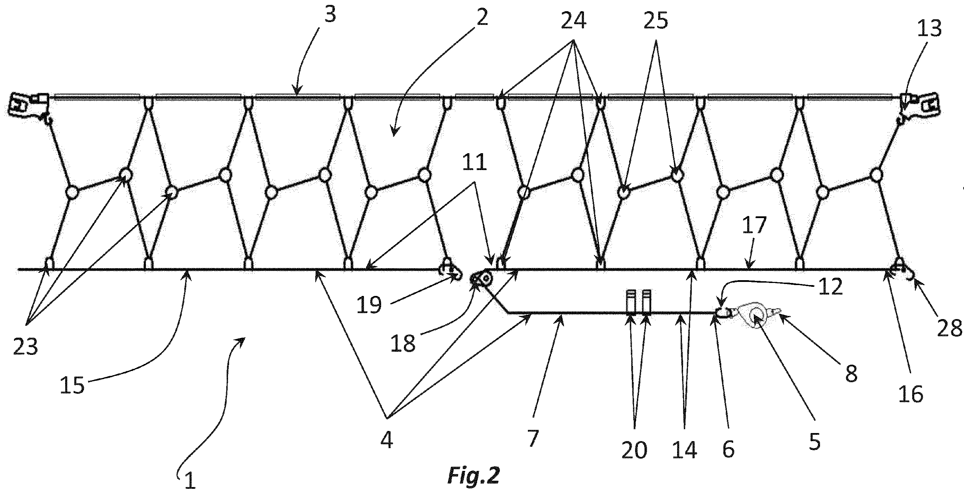

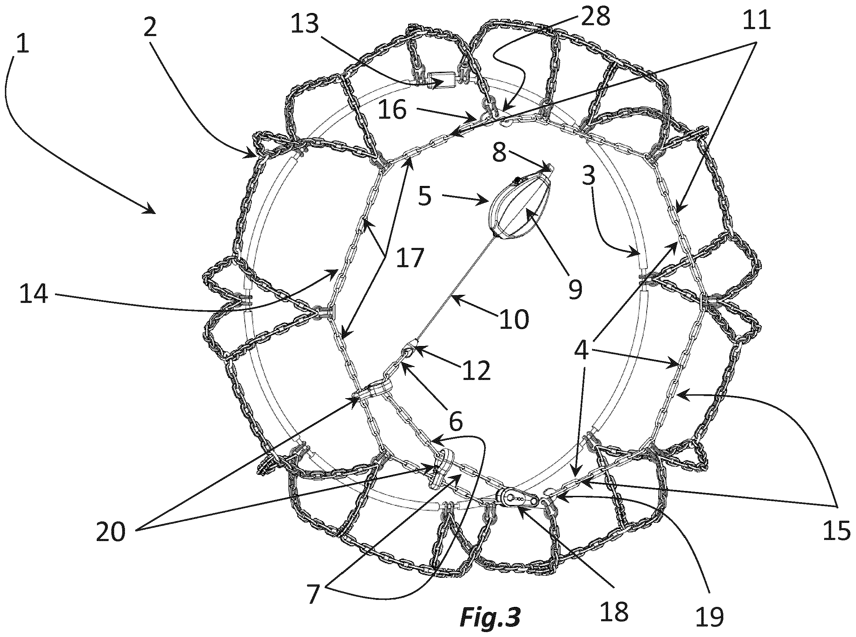

Zunächst wird auf Fig. 1 bis 3 Bezug genommen. In Fig. 1 sowie in Fig. 2 sind zwei Ausgestaltungen einer erfindungsgemäßen Schneekette 1 mit einer Spannvorrichtung 5 in einem nichtmontierten ausgelegten Zustand schematisch dargestellt; in Fig. 3 ist die Ausgestaltung der Schneekette 1 der Fig. 2 in teilmontierter Stellung gezeigt. Die Schneekette 1 umfasst ein Laufnetz 2, einen mithilfe eines Schlosselements 13 zu einem Ring schließbaren Innenspannstrang 3, einen O-förmig (ringartig, Fig. 1) oder zu einer Schlinge (Fig. 2) schließbaren Außenspannstrang 4 und eine Spannvorrichtung 5. Bei Montage wird zunächst die Schneekette dergestalt um den Reifen gelegt, sodass sich die Reifenränder zwischen dem Innenspannstrang 3 und dem Außenspannstrang 4 befinden. Danach wird der Innenspannstrang 3 der Schneekette 1 um die Achse des Kraftfahrzeugs gelegt und mithilfe des Schlosselements 13 zu einem Ring geschlossen (Fig. 3).

Bei der ersten, in Fig. 1 gezeigten, Ausgestaltung der Schneekette 1 kann der Außenspannstrang 4 mithilfe der Spannvorrichtung 5 O-förmig und ohne weitere Schritte geschlossen und gespannt werden. Dabei wird das freie Ende 6 mithilfe eines Verbindungselements 12 mit einem Spannseil 10, welches die Spannvorrichtung 5 umfasst, verbunden. Dies kann entweder durch eine feste Verbindung geschehen, wie es in Fig. 3 gezeigt ist, oder alternativ, wie in Fig. 1 und 2 gezeigt ist, durch eine lösbare Verbindung erfolgen, die beispielsweise als ein Hakenpaar 28 oder als ein Karabinerschloss oder als ein Kettenglied, welches geöffnet werden kann, ausgebildet ist. Eine lösbare Verbindung hat den Vorteil, dass die Spannvorrichtung 5 als eigener Bauteil der Schneekette 1 entnommen werden kann, was ein Auswechseln erleichtert. Danach wird die Spannvorrichtung 5 in Richtung eines weiteren Hakenpaares 19 gezogen und mit dem mithilfe eines Koppelelements 8 verbunden. Das Koppelelement 8 kann beispielsweise als ein Haken ausgebildet sein, welcher die Spannvorrichtung 5 mit dem Hakenpaar 19 des Außenspannstrangs 4 lösbar verbinden kann.

Bei der zweiten, in der Fig. 2 gezeigten Ausgestaltung wird der aus einem ersten Außenspannstrang-Abschnitt 14 und einem zweiten Außenspannstrang-Abschnitt 15 bestehende Außenstrang 4 wie folgt zu einer Schlinge geformt: Ein freies Ende 16 des ersten Außenspannstrang-Abschnitts 14 wird mit dem zweiten Außenspannstrang-Abschnitt 15 lösbar, beispielsweise mithilfe des Hakenpaares 28, verbunden, anschließend wird ein an dem ersten Außenspannstrang-Abschnitt 14 angeordneter Scheibenblock 18 mithilfe des Hakenpaares 19 mit dem zweiten Außenspannstrang-Abschnitt 15 lösbar verbunden. Ein überstehender, durch eine Öffnung an einer Seite des Scheibenblocks 9 geführter Abschnitt 7 des ersten Außenspannstrang-Abschnitts 14 wird mit Hilfe zweier Führungselemente 20 nah an einem mit dem Laufnetz 2 verbundenen Unterabschnitt 17 fixiert, sodass der überstehende Abschnitt 7 des ersten Außenspannstrang-Abschnitts 14 eine eventuelle Montage des Reifens nicht erschwert bzw. verhindert.

Durch Ziehen an einem freien Ende 6 des überstehenden Abschnitts 7 wird ein O-förmiger Teil 11 des Außenspannstrangs 4 gespannt, die Schlinge zugezogen und dadurch das Laufnetz 2 um den Reifen gelegt. Dieser Zustand der noch nicht vollständig abgeschlossenen Montage der Schneekette ist in Fig. 3 dargestellt.

Um die Montage abzuschließen, wird das freie Ende 6 des überstehenden Abschnitts 7 mithilfe eines Verbindungselements 12 mit einem Spannseil 10, welches die Spannvorrichtung 5 umfasst, verbunden. Dies kann, wie in obenstehender Beschreibung zur Fig. 1 dargelegt, entweder durch eine feste eine lösbare Verbindung erfolgen.

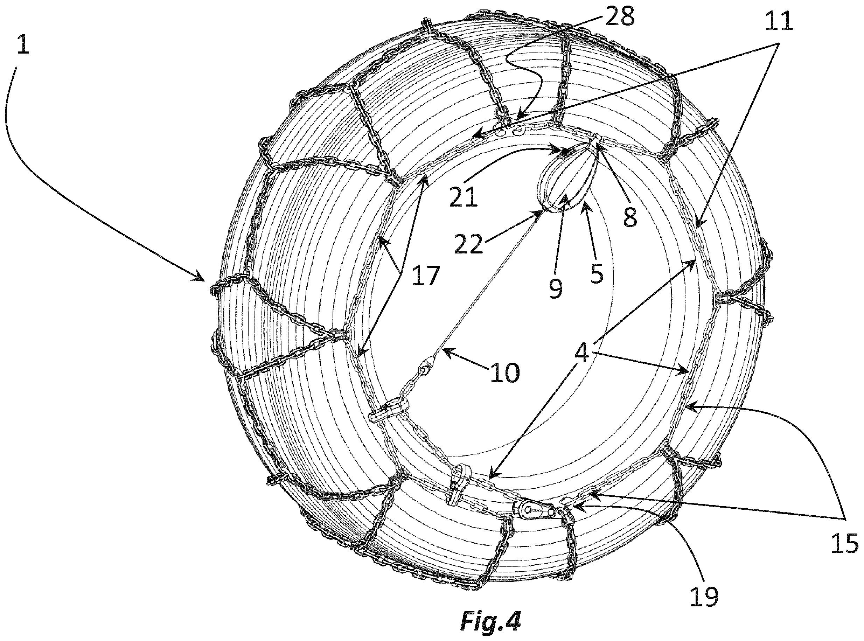

Abschließend wird die Spannvorrichtung 5 mit in Löserichtung geschobenem Betätigungselement 21 in Richtung des O-förmigen Teils 11 des Außenstrangs 4 gezogen und mit dem mithilfe eines Koppelelements 8 lösbar verbunden (Fig. 4). Die Verbindung des Koppelelements 8 kann beispielsweise mit dem zweiten Außenspannstrang-Abschnitt 15 oder mit dem Unterabschnitt 17 erfolgen.

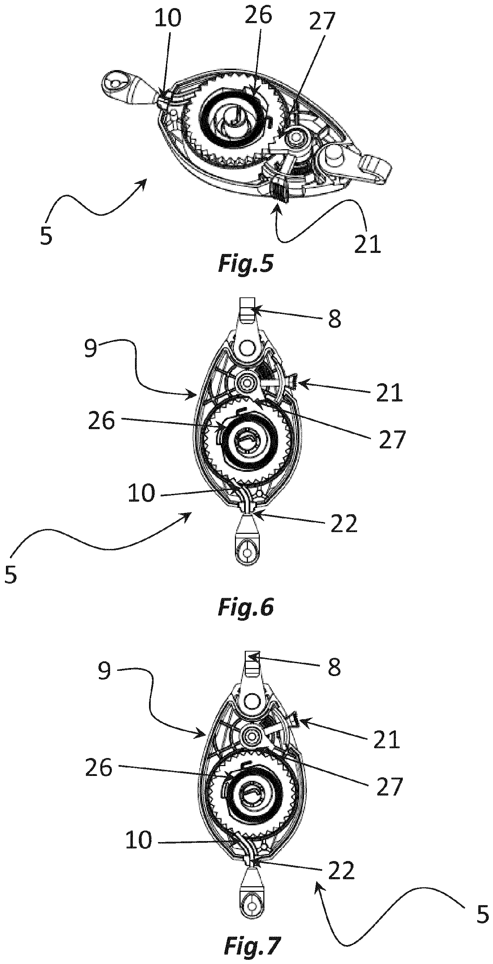

Die Schneekette 1 im montierten Zustand ist in Fig. 4 gezeigt. Das Spannen der Schneekette 1 geschieht durch Einstellen eines Betätigungselements 21 in eine Position, in welcher das Spannseil 10 durch eine, vorzugsweise gegenüber dem Koppelelement 8 angeordnete, Gehäuseöffnung 22 in das Gehäuse 9 hineingezogen, aber nicht hinausgezogen werden kann (Fig. 6). Das Spannseil 10 wird durch die Federkraft einer in Aufwickelrichtung vorgespannte Feder 26 gespannt (Fig. 5). Das Hinausziehen des Spannseils 10 kann mithilfe einer Ratschenvorrichtung 27, die eine Bewegung des Spannseils 10 entgegen seiner Spannrichtung blockiert, verhindert werden. Wie bereits erwähnt, wird dadurch gewährleistet, dass das Spannseil 10 im montierten Zustand der Schneekette 1 während einer Fahrt immer gespannt bleibt, wodurch das Laufnetz 2 über die Lauffläche des Reifens gespannt gehalten wird.

Der innere Aufbau der Spannvorrichtung 5 geht aus Fig. 5 hervor. Zum Aufwickeln des Spannseiles 10 ist eine Ratschenvorrichtung 27 vorgesehen, welche eine mit einer Feder 26 in Aufwickelrichtung vorgespannte Seilrolle mit einem drehfest verbundenen Zahnkranz umfasst. Dabei weist das Betätigungselement 21 eine Sperr- und eine Freigabeposition auf, zwischen den mithilfe einer mit dem Betätigungselement 21 einstellbaren Klinke geschaltet werden kann. In der Sperrposition (Fig. 6) des Betätigungselements 21 greift die Klinke in den Zahnkranz ein und blockiert das Spannseil 10 gegen Bewegung in seiner Spannrichtung. In der Freigabeposition (Fig. 7) des Betätigungselements 21 wirkt die Klinke nicht mit dem Zahnkranz zusammen, wodurch eine Bewegung des Spannseils 10 sowohl in als auch entgegen seiner Spannrichtung ermöglicht ist.

Die Geometrie des Laufnetzes 2 der Schneekette 1 ist in Fig. 1 und Fig. 2 ersichtlich. Das Laufnetz 2 ist aus mehreren Kettensträngen (wie z.B. aus eingangs erwähnten Gliederkettensträngen und / oder Rundstahlkettensträngen und / oder Stegkettensträngen) ausgebildet, welche in Kettenstrangknotenpunkten zusammentreffen bzw. aus diesen auslaufen. Die Kettenstrangknotenpunkte lassen sich zwei Gruppen zuordnen. Jeder Knoten der äußeren Knotenpunkt-Gruppe 24 liegt entweder am Innenspannstrang 3 oder am Außenspannstrang 4, vorzugsweise an dem O-förmigen Teil 11 des Außenspannstrangs 4. Die Knoten der inneren Knotenpunkt-Gruppe 25 liegen zwischen dem Innen- 3 und Außenspannstrang 4. Dabei ist jeder Knotenpunkt der inneren Gruppe 25 mithilfe eines Kettenstrangs mit zwei Knoten der äußeren Gruppe 24 und mit einem Knoten eigener Gruppe verbunden.

In dem beschriebenen, nicht einschränkenden Ausführungsbeispiel wurde eine Schneekette veranschaulicht, bei der die Spannvorrichtung mithilfe des Koppelelements an den O-förmigen Teil des Außenspannstrangs und mit dem Spannseil an das freie Ende des Außenspannstrangs gekoppelt wird. Alternative Kettenanordnungen sind ohne Weiteres vorstellbar, bei den z.B. die Spannvorrichtung mithilfe des Koppelelements mit dem freien Ende des Außenspannstrangs verbunden wird und das Spannseil mit dem O-förmigen Teil des Außenspannstrangs verbunden wird.

## Patentansprüche

1. Gleitschutzvorrichtung (1) für Fahrzeugreifen umfassend ein Laufnetz (2), einen Innenspannstrang (3), welcher Innenspannstrang (3) ringförmig schließbar ist, einen Außenspannstrang (4), welcher Außenspannstrang (4) ein erstes Ende (6) aufweist, wobei zumindest ein Teil des Außenspannstrangs (4) ringförmig schließbar ist, und eine Spannvorrichtung (5), welche Spannvorrichtung (5) ein mit Federkraft in die Spannvorrichtung (5) einziehbares Spannseil (10) aufweist,
**dadurch gekennzeichnet, dass**
der Außenspannstrang (4) schlingenförmig schließbar ist, nämlich dass der Außenspannstrang (4) in einem geschlossenen Zustand eine runde oder längliche Form bildet, ineinander verknüpft ist, und einen O-förmigen Teil (11) und einen überstehenden Abschnitt (7) aufweist, welcher überstehende Abschnitt (7) in einem geschlossenen Zustand des Außenspannstrangs (4) in das erste Ende (6) ausläuft,
die Spannvorrichtung (5) einerseits mit dem ersten Ende (6) lösbar verbindbar ist und andererseits mit dem in einem geschlossenen Zustand des Außenspannstrangs (4) O-förmigen Teil (11) des Außenspannstrangs (4) lösbar verbindbar ist, und
dem überstehenden Abschnitt (7) ein Scheibenblock (18) zugeordnet ist, wobei der überstehende Abschnitt (7) in einem geschlossenen Zustand des Außenspannstrangs (4) aus dem Scheibenblock (18) hinausläuft.

2. Gleitschutzvorrichtung nach Anspruch 1, **dadurch gekennzeichnet, dass** die Spannvorrichtung (5) mithilfe eines Koppelelements (8) mit dem Außenspannstrang (4) lösbar verbindbar ist und das Spannseil (10) mit dem ersten Ende (6) lösbar verbindbar oder fest verbunden ist.

3. Gleitschutzvorrichtung nach Anspruch 1, **dadurch gekennzeichnet, dass** das Spannseil (10) mit dem Außenspannstrang (4) lösbar verbindbar ist oder fest verbunden ist und die Spannvorrichtung (5) mithilfe eines Koppelelements (8) mit dem ersten Ende (6) lösbar verbindbar ist.

4. Gleitschutzvorrichtung nach Anspruch 2 oder 3, **dadurch gekennzeichnet, dass** das Koppelelement (8) gegenüber einer Gehäuseöffnung (22) angeordnet ist, durch welche Gehäuseöffnung (22) das Spannseil (10) aus der Spannvorrichtung (5) ausziehbar oder in die Spannvorrichtung (5) einziehbar ist.

5. Gleitschutzvorrichtung nach einem der Ansprüche 1 bis 4, **dadurch gekennzeichnet, dass** das Spannseil (10) ein Verbindungselement (12) aufweist, mit dessen Hilfe das Spannseil (10) mit dem ersten Ende (6) oder mit dem Außenspannstrang (4) lösbar verbindbar ist.

6. Gleitschutzvorrichtung nach einem der Ansprüche 1 bis 5, **dadurch gekennzeichnet, dass** der Innenspannstrang (3) ein Schlosselement (13) aufweist, mit dessen Hilfe der Innenspannstrang (3) ringförmig schließbar ist.

7. Gleitschutzvorrichtung nach einem der Ansprüche 1 bis 6, **dadurch gekennzeichnet, dass** das Spannseil (10) mit dem ersten Ende (6) lösbar verbindbar oder fest verbunden ist und die Spannvorrichtung (5) mithilfe eines Koppelelements (8) mit dem in einem geschlossenen Zustand des Außenspannstrangs (4) O-förmigen Teil (11) des Außenspannstrangs (4) lösbar verbindbar ist.

8. Gleitschutzvorrichtung nach einem der Ansprüche 1 bis 6, **dadurch gekennzeichnet, dass** die Spannvorrichtung (5) mithilfe eines Koppelelements (8) mit dem ersten Ende (6) lösbar verbindbar und das Spannseil (10) mit dem in einem geschlossenen Zustand des Außenspannstrangs (4) O-förmigen Teil (11) des Außenspannstrangs (4) lösbar verbindbar ist oder fest verbunden ist.

9. Gleitschutzvorrichtung nach einem der Ansprüche 1 bis 8, **dadurch gekennzeichnet, dass** der Außenspannstrang (4) einen ersten Außenspannstrang-Abschnitt (14) und einen zweiten Außenspannstrang-Abschnitt (15) aufweist, wobei der erste Außenspannstrang-Abschnitt (14) mit dem zweiten Außenspannstrang-Abschnitt (15) schlingenförmig schließbar ist, der überstehende Abschnitt (7) aus einem Teil des ersten Außenspannstrang-Abschnitts (14) gebildet ist, und vorzugsweise der zweite Außenspannstrang-Abschnitt (15) mit dem Laufnetz (2) verbunden ist und der erste Außenspannstrang-Abschnitt (14) einen Unterabschnitt (17) aufweist, wobei der Unterabschnitt (17) mit dem Laufnetz (2) verbunden ist.

10. Gleitschutzvorrichtung nach Anspruch 9, **dadurch gekennzeichnet, dass** der erste Außenspannstrang-Abschnitt (14) ein zweites Ende (16) aufweist, wobei das zweite Ende (16) mit dem zweiten Außenspannstrang-Abschnitt (15) lösbar verbindbar ist.

11. Gleitschutzvorrichtung nach einem der Ansprüche 1 bis 10, **dadurch gekennzeichnet, dass** der Scheibenblock (18) mithilfe eines Hakenpaares (19) mit dem zweiten Außenspannstrang-Abschnitt (15) lösbar verbindbar ist.

12. Gleitschutzvorrichtung nach einem der Ansprüche 1 bis 11, **dadurch gekennzeichnet, dass** dem überstehenden Abschnitt (7) zumindest ein Führungselement (20) zugeordnet ist, wobei das zumindest eine Führungselement (20) zumindest zwei Öffnungen aufweist, wobei in einem geschlossenen Zustand des Außenspannstrangs (4) der überstehende Abschnitt (7) und der O-förmigen Teil (11) des Außenspannstrangs (4) durch das zumindest eine Führungselement (20) führbar sind.

13. Gleitschutzvorrichtung nach einem der Ansprüche 1 bis 12, **dadurch gekennzeichnet, dass** die Spannvorrichtung (5) zumindest eine Blockierposition aufweist, in welcher das Spannseil (10) gegen Bewegung entgegen seiner Spannrichtung blockierbar ist.

14. Gleitschutzvorrichtung nach einem der Ansprüche 1 bis 13, **dadurch gekennzeichnet, dass** das Laufnetz (2) aus Gliederkettensträngen und / oder Rundstahlkettensträngen und / oder Stegkettensträngen gebildet ist.

## Claims

1. An anti-skid device (1) for vehicles, comprising a continuous chain mesh (2), an inner tensioning strand (3), which inner tensioning strand can be closed in an annular manner, an outer tensioning strand (4), which outer tensioning strand (4) has a first end (6), wherein at least part of the outer tensioning strand (4) can be closed in an annular manner, and a tensioning device (5), which tensioning device (5) has a tensioning cable (10) that can be retracted with spring force into the tensioning device (5),
**characterised in that**
the outer tensioning strand (4) can be closed in a loop-like manner, specifically **in that** the outer tensioning strand (4) in a closed state forms a round or elongate form, is linked in itself, and has an O-shaped part (11) and a protruding portion (7), which protruding portion (7) runs into the first end (6) in a closed state of the outer tensioning strand (4),
the tensioning device (5) on the one hand is detachably connectable to the first end (6) and on the other hand is detachably connectable to the part (11) of the outer tensioning strand (4) that is O-shaped in a closed state of the outer tensioning strand (4), and
a sheave block (18) is assigned to the protruding portion (7), wherein the protruding portion (7) in a closed state of the outer tensioning strand (4) runs out from the sheave block (18).

2. The anti-skid device according to claim 1,
**characterised in that** the tensioning device (5) is detachably connectable to the outer tensioning strand (4) with the aid of a coupling element (8) and the tensioning cable (10) is detachably connectable or fixedly connected to the first end (6).

3. The anti-skid device according to claim 1,
**characterised in that** the tensioning cable (10) is detachably connectable or fixedly connected to the outer tensioning strand (4) and the tensioning device (5) is detachably connectable to the first end (6) with the aid of a coupling element (8).

4. The anti-skid device according to claim 2 or 3,
**characterised in that** the coupling element (8) is arranged opposite a housing opening (22), through which housing opening (22) the tensioning cable (10) can be extracted from the tensioning device (5) or can be retracted into the tensioning device (5).

5. The anti-skid device according to any one of claims 1 to 4, **characterised in that** the tensioning cable (10) has a connection element (12), with the aid of which the tensioning cable (10) is detachably connectable to the first end (6) or to the outer tensioning strand (4).

6. The anti-skid device according to any one of claims 1 to 5, **characterised in that** the inner tensioning strand (3) has a lock element (13), with the aid of which the inner tensioning strand (3) can be closed in an annular manner.

7. The anti-skid device according to any one of claims 1 to 6, **characterised in that** the tensioning cable (10) is detachably connectable or fixedly connected to the first end (6) and the tensioning device (5) is detachably connectable with the aid of a coupling element (8) to the part (11) of the outer tensioning strand (4) that is O-shaped in a closed state of the outer tensioning strand (4).

8. The anti-skid device according to any one of claims 1 to 6, **characterised in that** the tensioning device (5) is detachably connectable to the first end (6) with the aid of a coupling element (8) and the tensioning cable (10) is detachably connectable or fixedly connected to the part (11) of the outer tensioning strand (4) that is O-shaped in a closed state of the outer tensioning strand (4).

9. The anti-skid device according to any one of claims 1 to 8, **characterised in that** the outer tensioning strand (4) has a first outer tensioning strand portion (14) and a second outer tensioning strand portion (15), wherein the first outer tensioning strand portion (14) can be closed with the second outer tensioning strand portion (15) in a loop-like manner, the protruding portion (7) is formed of part of the first outer tensioning strand portion (14), and the second outer tensioning strand portion (15) is preferably connected to the continuous chain mesh (2), and the first outer tensioning strand portion (14) has a lower portion (17), wherein the lower portion (17) is connected to the continuous chain mesh (2).

10. The anti-skid device according to claim 9, **characterised in that** the first outer tensioning strand portion (14) has a second end (16), wherein the second end (16) is detachably connectable to the second outer tensioning strand portion (15).

11. The anti-skid device according to any one of claims 1 to 10, **characterised in that** the sheave block (18) is detachably connectable to the second outer tensioning strand portion (15) with the aid of a hook pair (19).

12. The anti-skid device according to any one of claims 1 to 11, **characterised in that** at least one guide element (20) is assigned to the protruding portion (7), wherein the at least one guide element (20) has at least two openings, wherein, in a closed state of the outer tensioning strand (4), the protruding portion (7) and the 0-shaped part (11) of the outer tensioning strand (4) can be guided by the at least one guide element (20).

13. The anti-skid device according to any one of claims 1 to 12, **characterised in that** the tensioning device (5) has at least one blocking position, in which the tensioning cable (10) can be blocked against movement counter to a tensioning direction.

14. The anti-skid device according to any one of claims 1 to 13, **characterised in that** the continuous chain mesh (2) is formed of chain link strands and/or round steel chain strands and/or drag chain strands.

## Revendications

1. Dispositif antidérapant (1) pour pneus de véhicule, comportant un filet de roulement (2), un brin de tension interne (3), lequel brin de tension interne (3) est apte à être fermé en anneau, un brin de tension externe (4), lequel brin de tension externe (4) présente une première extrémité (6), au moins une partie du brin de tension externe (4) étant apte à être fermée en anneau, et un dispositif tendeur (5), lequel dispositif tendeur (5) présente un câble tendeur (10) rétractable dans le dispositif tendeur (5) avec une force élastique,
**caractérisé par le fait que**
le brin de tension externe (4) est apte à être fermé en boucle, à savoir que le brin de tension externe (4) définit une forme ronde ou allongée dans un état fermé, se noue, et présente une partie en forme de O (11) et une section saillante (7), laquelle section saillante (7) se prolonge par la première extrémité (6) dans un état fermé du brin de tension externe (4);
le dispositif tendeur (5) d'une part est apte à être relié de façon amovible à la première extrémité (6) et d'autre part est apte à être relié de façon amovible avec la partie en forme de O (11) du brin de tension externe (4) dans un état fermé du brin de tension externe (4); et
un organe de blocage à poulies (18) est associé à la section saillante (7), la section saillante (7) sortant de l'organe de blocage à poulies (18) dans un état fermé du brin de tension externe (4).

2. Dispositif antidérapant selon la revendication 1, **caractérisé par le fait que** le dispositif tendeur (5) peut être relié de façon amovible au brin de tension externe (4) au moyen d'un élément de couplage (8) et le câble tendeur (10) peut être relié de façon amovible ou solidarisé avec la première extrémité (6).

3. Dispositif antidérapant selon la revendication 1, **caractérisé par le fait que** le câble tendeur (10) peut être relié de façon amovible ou est solidarisé avec le brin de tension externe (4) et le dispositif tendeur (5) peut être relié de façon amovible avec la première extrémité (6) au moyen d'un élément de couplage (8).

4. Dispositif antidérapant selon l'une des revendications 2 ou 3, **caractérisé par le fait que** l'élément de couplage (8) est disposé vis-à-vis d'une ouverture de boîtier (22), à travers laquelle ouverture de boîtier (22) le câble tendeur (10) peut être tiré hors du dispositif tendeur (5) ou peut être rétracté dans le dispositif tendeur (5).

5. Dispositif antidérapant selon l'une des revendications 1 à 4, **caractérisé par le fait que** le câble tendeur (10) présente un élément de liaison (12), à l'aide duquel le câble tendeur (10) peut être relié de façon amovible avec la première extrémité (6) ou avec le brin de tension externe (4).

6. Dispositif antidérapant selon l'une des revendications 1 à 5, **caractérisé par le fait que** le brin de tension interne (3) présente un élément de fermeture (13), à l'aide duquel le brin de tension interne (3) peut être fermé en anneau.

7. Dispositif antidérapant selon l'une des revendications 1 à 6, **caractérisé par le fait que** le câble tendeur (10) peut être relié de façon amovible ou est solidarisé avec la première extrémité (6) et le dispositif tendeur (5) peut être relié de façon amovible avec la partie en forme de O (11) du brin de tension externe (4) dans un état fermé du brin de tension externe (4) à l'aide d'un élément de couplage (8).

8. Dispositif antidérapant selon l'une des revendications 1 à 6, **caractérisé par le fait que** le dispositif tendeur (5) peut être relié de façon amovible avec la première extrémité (6) au moyen d'un élément de couplage (8) et le câble tendeur (10) peut être relié de façon amovible ou est solidarisé avec la partie en forme de O (11) du brin de tension externe (4) dans un état fermé du brin de tension externe (4).

9. Dispositif antidérapant selon l'une des revendications 1 à 8, **caractérisé par le fait que** le brin de tension externe (4) présente une première section de brin de tension externe (14) et une seconde section de brin de tension externe (15), la première section de brin de tension externe (14) pouvant être fermée en boucle avec la seconde section de brin de tension externe (15), la section en saillie (7) est formée à partir d'une partie de la première section de brin de tension externe (14), et de préférence la seconde section de brin de tension externe (15) est reliée avec le filet de roulement (2) et la première section de brin de tension externe (14) présente une sous-section (17), la sous-section (17) étant reliée avec le filet de roulement (2).

10. Dispositif antidérapant selon la revendication 9, **caractérisé par le fait que** la première section de brin de tension externe (14) présente une seconde extrémité (16), la seconde extrémité (16) pouvant être reliée de façon amovible avec la seconde section de brin de tension externe (15).

11. Dispositif antidérapant selon l'une des revendications 1 à 10, **caractérisé par le fait que** l'organe de blocage à poulies (18) peut être relié de façon amovible avec la seconde section de brin de tension externe (15) à l'aide d'une paire de crochets (19).

12. Dispositif antidérapant selon l'une des revendications 1 à 11, **caractérisé par le fait qu'**au moins un élément de guidage (20) est associé à la section en saillie (7), l'au moins un élément de guidage (20) présentant au moins deux ouvertures, dans un état fermé du brin de tension externe (4) la section en saillie (7) et la partie en forme de O (11) du brin de tension externe (4) pouvant être guidées par l'au moins un élément de guidage (20).

13. Dispositif antidérapant selon l'une des revendications 1 à 12, **caractérisé par le fait que** le dispositif tendeur (5) présente au moins une position de blocage, dans laquelle le câble tendeur (10) peut être bloqué vis-à-vis d'un déplacement à l'encontre de sa direction de tension.

14. Dispositif antidérapant selon l'une des revendications 1 à 13, **caractérisé par le fait que** le filet de roulement (2) est formé à partir de brins de chaîne à maillons et/ou de brins de chaîne en acier rond et/ou de brins de chaîne à maillons à étais.
